# EUROPÄISCHE PATENTSCHRIFT

(11) **EP 0 491 905 B1**
(45) Veröffentlichungstag und Bekanntmachung des Hinweises auf die Patenterteilung: **10.05.1995**
(21) Anmeldenummer: 91912150.9
(22) Anmeldetag: 26.06.1991
(51) Int. Cl.: B65G 57/28, B65B 5/08, B65B 25/14

(54) **VORRICHTUNG UND VERFAHREN ZUM ABSTAPELN VON KLEINGUT**
DEVICE AND PROCESS FOR UNSTACKING SMALL OBJECTS
PROCEDE ET DISPOSITIF DE DESEMPILAGE DE MARCHANDISES DE PETITES DIMENSIONS

(30) Priorität: 12.07.1990 DE 4022162
(43) Veröffentlichungstag der Anmeldung: 01.07.1992
(73) Patentinhaber: Licentia Patent-Verwaltungs-GmbH, 60596 Frankfurt (DE)
(72) Erfinder: MALOW, Siegmar, D-78465 Konstanz (DE)
(74) Vertreter: Vogl, Leo, Dipl.-Ing.
(86) Internationale Anmeldenummer: EP9101197
(87) Internationale Veröffentlichungsnummer: WO9200908

(56) Entgegenhaltungen:
- EP-A- 0 154 093
- EP-A- 0 340 502
- DE-A- 3 523 288
- FR-A- 1 204 400
- US-A- 4 007 575

## Beschreibung

Die Erfindung betrifft eine Vorrichtung zum Abstapeln von Kleingut, insbesondere von Päckchen, nach dem Oberbegriff des Anspruchs 1.

Es sind derartige Vorrichtungen bekannt, bei denen das abzustapelnde Kleingut in einen Aufnahmebehälter gekippt wird. Das Gut läuft dabei über eine schräge Fläche oder wird durch eine abkippbare Schale in den Aufnahmebehälter geführt.

Diese bekannten Vorrichtungen weisen den Nachteil auf, daß ein einwandfreies Stapeln in dem Behälter und damit eine gute Raumausnutzung des Behälters nicht gegeben ist.

Aus der EP-A-0154092 ist eine Vorrichtung bekannt, bei der ein Behälter mit seiner Öffnung am Ende der Fläche schwenkbar angeordnet ist und sich auf der Fläche eine in Richtung der Öffnung des Behälters bewegbarer Schieber sowie eine Rückhalterschwelle befindet. Dieser Vorrichtung ist es möglich bereits aufgestapelte Gegenstände stapelweise in den Behälter abzulegen.

Aufgabe der Erfindung ist es, eine Vorrichtung zum Abstapeln von Kleingut, insbesondere von Päckchen, zu schaffen, bei der das abzustapelnde Kleingut geordnet in dem Behälter abgelegt wird und der Behälter anschließend auf einem Transportband abtransportiert werden kann.

Gemäß der Erfindung wird dies durch die im Anspruch 1 angegebenen Merkmale erreicht.

In einer bevorzugten Ausführungsform der Erfindung wird der Kleingutstapel im Behälter durch einen Abdeckrechen festgehalten, so daß das Kleingut nicht aus dem Behälter kippen kann.

Ein Ausführungsbeispiel der Erfindung ist nachfolgend anhand der beiliegenden Zeichnung beschrieben.
- Fig. 1: zeigt eine erfindungsgemäße Vorrichtung mit eingeschwenktem Behälter zum Einstapeln des Kleingutes;
- Fig. 2: die erfindungsgemäße Vorrichtung mit abgeschwenktem Behälter zum Weitertransport;
- Fig, 3, 4, 5, 6, 7, u.8: den Abstapelvorgang im Detail.

In der Zeichnung ist mit 1 eine Transportstrecke für das abzustapelnde Kleingut bezeichnet, die den einzelnen Abstapelplätzen das Kleingut zuführt. Die Ausleitung des Kleingutes aus der Transportstrecke erfolgt durch einen Ausschleusmodul 2, der aus seitlich verschwenkbaren Transportbändern besteht. Durch den Ausschleusmodul wird das Kleingut 18 auf eine vor dem Behälter angeordnete Fläche 3 gelenkt, die mit einer im Querschnitt dreieckförmigen Rückhalterschwelle 4 und einem ausschwenkbaren winkelförmigen Abdeckrechen 5 versehen ist. Ferner ist auf der Fläche 3 ein Schieber 6 angeordnet, der durch eine Schubstange 7 in Richtung der Öffnung des Behälters verschiebbar ist. Der Behälter 8 zur Aufnahme des Kleingutes ist mit winkelförmigen Elementen 9 derart vor das Ende der Fläche 3 geschwenkt, daß seine Öffnung 10 bündig vor der Fläche 3 liegt, so daß das Kleingut in den Behälter einschiebbar ist.

Die winkelförmigen Elemente 9 sind an einer Dreh- und Schwenkachse 11 derart angeordnet, daß der Behälter durch Verschwenken der Winkel 9 und der Achse 11 von der Fläche 3 im Winkel abgeschwenkt und nach unten auf ein Förderband 12 gesetzt werden kann. Die abgewinkelten Teile der winkelförmigen Elemente 9 liegen nach Abschwenken unterhalb der Rollen 13 der Rollenbahn 12.

Senkrecht zur Fläche 3 liegt eine Wandung 14, deren Ende mit dem Ende der Fläche 3 bündig an den Kanten der Öffnung 10 des Behälters 8 anliegt.

An der Wandung 14 ist ein abschwenkbarer Rechen 15 angeordnet, dessen Rechenzahne 16 in ihrer Breite den Abstand zwischen den Zähnen 17 des Abdeckrechens 5 entsprechen.

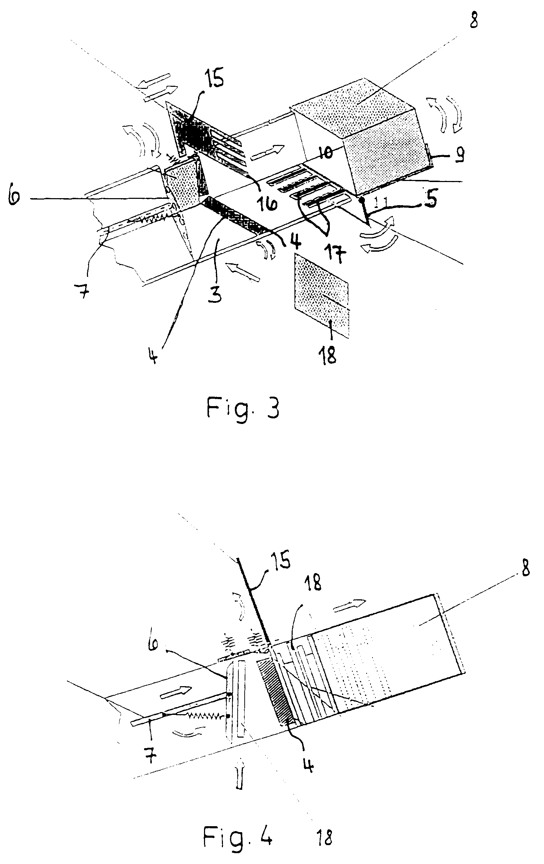

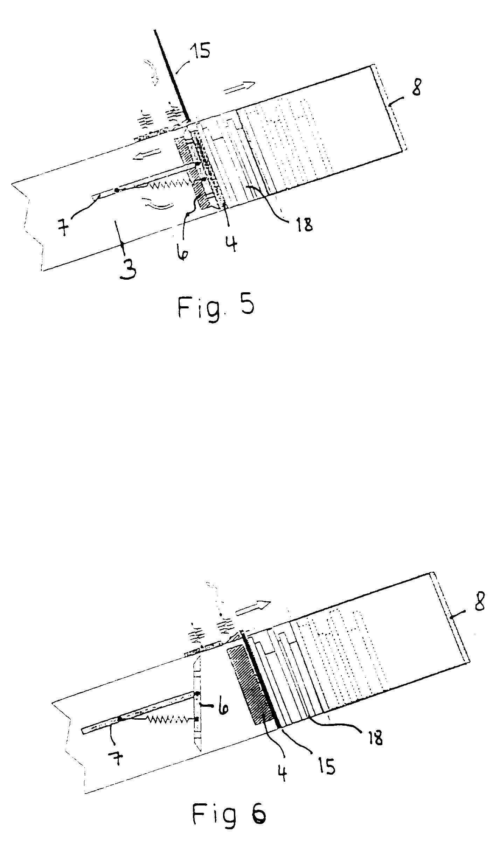

Der Abstapelvorgang erfolgt wie nachfolgend beschrieben:
Durch den Ausschleusmodul 2 wird das Kleingut 18 auf die Fläche 3 gebracht (Fig. 3) und durch den Schieber 6 über die Rückhalteschwelle 4 auf der Fläche 3 verschoben (Fig. 4 u. 5). Dieser Vorgang wiederholt sich so oft, bis die Füllhöhe des Behälters erreicht ist. Die Füllhöhe wird dabei durch Sensoren überwacht. Nach Erreichen der Füllhöhe schwenkt der Rechen 15 auf die Fläche 3 und schiebt sämtliche Kleingutstücke 18 in den Behälter 8 (Fig. 5 u. 6).

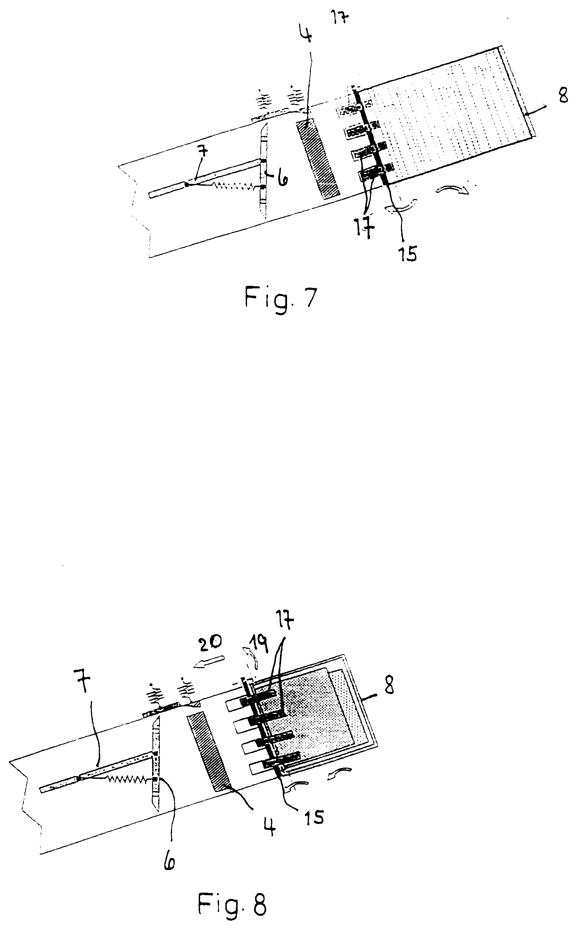

Anschließend schwenken die Zähne 17 des winkelförmigen Abdeckrechens 5 nach oben und halten die in den Behälter eingeschobenen Kleingutstücke 18 im Behälter fest (Fig. 7). Der Einschieberrechen 15 kann dann nach oben geschwenkt und zurückgezogen werden, wie in Fig. 8 durch die Pfeile 19, 20 angezeigt.

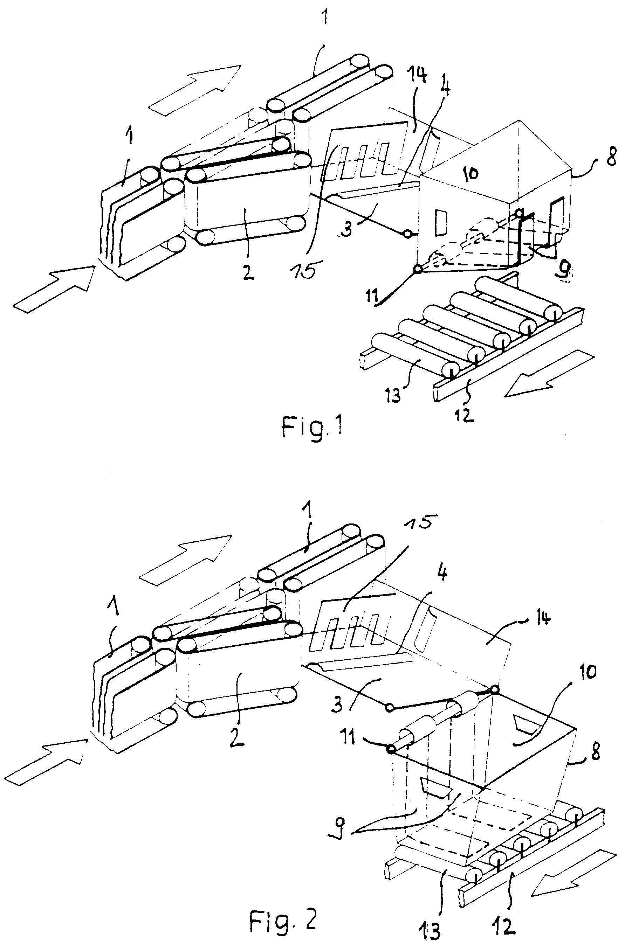

Fig. 2 zeigt das Abschwenken des gefüllten Behälters. Der Abschwenkvorgang erfolgt in der Weise, daß um die Dreh- u. Schwenkachse 11 nach außen verschwenkt und die winkelförmigen Elemente 9 nach unten abgesenkt werden. Wie oben bereits ausgeführt, liegt dann der Behälter 8 auf den Rollen 13 des Förderbandes 12 auf und kann abtransportiert werden.

## Patentansprüche

1. Vorrichtung zum Abstapeln von Kleingut (18), insbesondere Päckchen, in einem Behälter (8), wobei das Kleingut (18) über ein Ausschleusmodul (2) einer vor dem Behälter (8) angeordneten Fläche (3) zuführbar ist, wobei der Behälter (8) mit seiner Öffnung (10) am Ende der Fläche (3) schwenkbar angeordnet ist und auf der Fläche (3) sich ein in Richtung der Öffnung (10) des Behälters (8) bewegbarer Schieber (6) befindet sowie im wesentlichen senkrecht zur Zuführrichtung des Kleinguts (18) auf der Fläche (3) eine Rückhalterschwelle (4) angeordnet ist, wobei das Kleingut (18) durch den Schieber (6) über die Rückhalterschwelle (4) auf der Fläche (3) in Richtung auf den Behälter (8) zu verschieben ist, **dadurch gekennzeichnet**, daß der Behälter (8) mit winkelförmigen Elementen (9) derart vor das Ende der Fläche (3) geschwenkt ist, daß das Kleingut (18) in den Behälter (8) einschiebbar ist, wobei die winkelförmigen Elemente (9) an einer Dreh- und Schwenkachse (11) derartig angeordnet sind, daß der Behälter (8) durch Verschwenken der winkelförmigen Elemente (9) um die Achse (11) von der Fläche (3) im Winkel abgeschwenkt und nach unten auf eine Rollenbahn (12) gesetzt werden kann und daß ein nach der Rückhalterschwelle (4) senkrecht zur Zuführrichtung des Kleinguts (18) angeordneter Rechen (15) mit Rechenzähnen (17) zum Verschieben des Kleinguts (18) in den Behälter (8) vorgesehen ist.

2. Vorrichtung nach Anspruch 1, dadurch gekennzeichnet, daß die Rückhalterschwelle (4) im Querschnitt dreieckförmig ausgebildet ist.

3. Vorrichtung nach Anspruch 1 oder 2, dadurch gekennzeichnet, daß vor der Öffnung (10) des Behälters (8) auf der Fläche (3) ein ausschwenkbarer winkelförmiger Abdeckrechen (5) mit Zähnen (17) angeordnet ist, um in den Behälter (8) eingehobene Kleingutstücke (18) im Behälter (8) festzuhalten, wobei die Rechenzähne (17) in ihrer Breite den Abstand zwischen den Zähnen (16) des Rechens (15) entsprechen und wobei der Rechen (15) nach oben ausschwenkbar und zurückziehbar ist.

4. Verfahren zum Betreiben einer Vorrichtung nach Anspruch 3, dadurch gekennzeichnet, daß über den Ausschleusmodul (2) das Kleingut (18) der Fläche (3) zugeführt wird und durch den Schieber (6) über die Rückhalterschwelle (4) auf der Fläche (3) verschoben wird, wodurch die Füllhöhe des Behälters (8) erreicht wird, und daß nach Erreichen der Füllhöhe sämtliche Kleingutstücke (18) mittels des Rechens (15) in den Behälter (8) geschoben werden, daß die eingeschobenen Kleingutteile (18) durch Ausschwenken des winkelförmigen Abdeckrechens (5) im Behälter (8) gehalten werden und anschließend der Behälter (8) mittels der winkelförmigen Elemente (9) auf die Rollenbahn (12) abgesenkt wird.

## Claims

1. Device for forming small stock (18) into stacks, especially packages in a container (8), wherein the small stock (18) is feedable by way of a discharge module (2) to a surface (3) arranged in front of the container (8), wherein the container (8) is pivotably arranged with its opening (10) at the end of the surface (3) and a pusher (6) movable in direction of the opening (10) of the container (8) is arranged on the surface (3) as well as a restraining sill (4) is arranged substantially perpendicularly to the feed direction of the small stock (18) on the surface (3), wherein the small stock (18) is to be displaced by the pusher (6) over the restraining sill (4) on the surface (3) in direction towards the container (8), characterised thereby that the container (8) is pivotably mounted by angle elements (9) in such a manner in front of the end of the surface (3) that the small stock (18) is pushable into the container (8), wherein the angle elements (9) are arranged at a rotational and pivot axis (11) in such a manner that the container (8) pivots out, by pivotation of the angle elements (9) about the axis (11), from the surface (3) at an angle and can be placed downwards onto a roller path (12), and that a rake (15), which is arranged after the restraining sill (4) and perpendicularly to the feed direction of the small stock (18), with rake teeth (17) for displacing the small objects (18) into the container (8) is provided.

2. Device according to claim 1, characterised thereby that the restraining sill (4) is formed to be triangular in cross-section.

3. Device according to claim 1 or 2, characterised thereby that an angled cover rake (5), which is pivotable out, with teeth (17) is arranged in front of the opening (10) of the container (8) and on the surface (3) in order to hold in place in the container (8) items of small stock (18) placed into the container (8), wherein the rake teeth (17) correspond in their width to the spacing between the teeth (16) of the rake (15) and wherein the rake (15) is pivotable upwardly and withdrawable.

4. Method of operating a device according to claim 3, characterised thereby that the small stock (8) is fed to the surface (3) by way of the discharge module (2) and is pushed by the pusher (6) over the restraining sill (4) on the surface (3), whereby the filling level of the container (8) is attained, and that after attainment of the filling level all items of small stock (18) are pushed into the container (8) by means of the rake (15), that the pushed-in small stock parts (18) are held in the container (8) by pivoting out of the angled cover rake (5) and subsequently the container (8) is lowered onto the roller path (12) by means of the angle elements (9).

## Revendications

1. Appareil pour désempiler des petits objets (18), en particulier des petits paquets, dans un réceptacle (8), les petits objets (18) pouvant être amenés via un module d'évacuation (2) à une surface (3) agencée devant le réceptacle (8), le réceptacle (8) étant agencé en basculement avec son ouverture (10) à l'extrémité de la surface (3), et sur la surface (3) sont situés un coulisseau (6) mobile en direction de l'ouverture (10) du réceptacle (8), ainsi qu'un seuil de retenue (4) qui s'étend sur la surface (3) et sensiblement perpendiculairement à la direction d'amenée des petits objets (18), les petits objets (18) devant être déplacés au moyen du coulisseau (6) et par dessus le seuil de retenue (4) sur la surface (3) en direction du réceptacle (8), caractérisé en ce que le réceptacle (8) est basculé au moyen d'éléments en équerre (9) et devant l'extrémité de la surface (3), de telle manière que les petits objets (18) peuvent être introduits dans le réceptacle (8), les éléments en équerre (9) étant agencés sur un axe de rotation et de basculement (11) de telle manière que le réceptacle (8) est basculé sous un ange par rapport à la surface (3) par basculement des éléments en équerre (9) autour de l'axe (11), et peut être posé vers le bas sur une voie à rouleaux (12), et en ce qu'il est prévu un peine (15) avec des dents (17) agencé après le seuil de retenue (4) perpendiculairement à la direction d'amenée des petits objets (18), afin de déplacer les petits objets (18) dans le réceptacle (8).

2. Appareil selon la revendication 1, caractérisé en ce que le seuil de retenue (4) est réalisé avec une forme triangulaire en section transversale.

3. Appareil selon l'une ou l'autre des revendications 1 et 2, caractérisé en ce qu'il est prévu devant l'ouverture (10) du réceptacle (8) et sur la surface (3) un peigne de recouvrement (5) avec des dents (17), en forme d'équerre et capable d'être basculé vers l'extérieur, afin de retenir fermement dans le réceptacle (8) les petits objets (18) introduits dans le réceptacle (8), les dents (17) du peigne correspondant par leur largeur à la distance entre les dents (16) du peigne (15), et en ce que le peigne (15) peut être basculé vers le haut et retiré.

4. Procédé de mise en oeuvre d'un appareil selon la revendication 3, caractérisé en ce que l'on amène via le module d'évacuation (2) les petits objets (18) sur la surface (3), en ce qu'on les déplace sur la surface (3) au moyen du coulisseau (6) et par dessus le seuil de retenue (4), grâce à quoi on atteint la hauteur de remplissage du réceptacle (8), et en ce qu'après avoir atteint la hauteur de remplissage, on déplace la totalité des petits objets (18) au moyen du peigne (15) dans le réceptacle (8) ; en ce que les petits objets introduits (18) sont maintenus dans le réceptacle (8) par basculement du peigne de recouvrement (5) en forme d'équerre, et en ce que le réceptacle (8) est ensuite abaissé sur la voie à rouleaux (12) au moyen des éléments en équerre (9).
